# EUROPEAN PATENT APPLICATION

(11) **EP 0 558 141 A1**
(43) Date of publication of application: **01.09.1993**
(21) Application number: 93200507.7
(22) Date of filing: 23.02.1993
(51) Int. Cl.: A23C 9/12, A23C 9/13, A23L 1/236

(54) **Lactose-hydrolyzed milk with suppressed sweetness**

(30) Priority: 27.02.1992 US 842868
(71) Applicant: STERLING WINTHROP INC., New York, NY 10016 (US)
(72) Inventor: Flynn, Robert George, Princeton, NJ 08540 (US); Bakal, Abraham Itshak, Fairfield, NJ 07004 (US); Snyder, Margaret Ann, Fairfield, NJ 07004 (US)
(74) Representative: Denholm, Anna Marie

(57) **Abstract**

A lactose-hydrolyzed fluid milk comprising fluid milk, the normal lactose content of which has been reduced by at least about 70% by lactase hydrolysis, having incorporated therein from about 1 to about 10 ppm of 2-(4-methoxyphenoxy)propanoic acid or a salt thereof, a method of preparation thereof and a method of suppressing perceived sweetness of lactose-hydrolyzed milk by incorporating 2-(4-methoxyphenoxy)propanoic acid or a salt thereof in the milk.

## Description

This invention relates to fluid milk in which a major amount of the lactose present therein has been hydrolyzed by lactase enzymes and to milk products derived therefrom and more specifically to such fluid milk and milk products which incorporate 2-(4-methoxyphenoxy)propanoic acid or a salt thereof to counteract increased sweetness resulting from lactose hydrolysis.

It is generally known that milk and milk products contain high percentages of lactose. For example, the lactose content of regular homogenized pasteurized milk (3.5% butterfat) is 4.9%, of lowfat milk (2% butterfat) is 6.0%, and of fluid skim milk is 5.1%.

It is well known to those familiar with the state-of-the-art, that there exists a significant population which cannot totally digest lactose. This population is generally referred to in the professional literature as lactose intolerant. The estimated number of individuals exhibiting lactose malabsorption in the USA is between 28 and 75 million. The incidence in certain population sub-groups is significantly higher than others. For example, it is estimated that lactose intolerance in American blacks may be over 60%, whereas the incidence in American whites is less than 25%.

It is generally believed that individuals suffering from lactose intolerance have lactase deficiency. Several approaches have been undertaken by the industry to alleviate this problem. Generally, these approaches may be classified into two categories:
(1) Providing to the lactose-intolerant individual an enzyme preparation which contains a stabilized form of lactase. This preparation is ingested within a prescribed time prior to or with the ingestion of the lactose-containing products.
(2) Hydrolyzing the lactose using lactase enzymes prior to its ingestion. For example, lactase enzymes are added to fluid milk and sufficient time is allowed to assure the hydrolysis of the lactose into glucose and galactose.

Lactase is a trivial name for the β-galactosidases which catalyze the hydrolysis of lactose to its component saccharides, glucose and galactose. Sources of lactase, including commercial sources, are described in the literature. See, for example, R.R. Mahoney, Developments In Dairy Chemistry, Chapter 3, Edited by P.F. Fox, Elsevier Applied Science Publishers, 1985. Lactase enzymes used in processing dairy foods are derived from the yeasts Kluyveromyces fragilis, Kluyveromyces lactis and Candida pseudotropicalis. Lactase enzymes are available both in liquid form, e.g., as solutions in water/glycerin, or in powder form. The activity of these enzymes is based on neutral lactase units (NLU) as determined by assay and falls in the range of from approximately 1000 to 5000 NLU/gram. It requires one gallon of 1000 NLU/gram activity product to convert 1000 gallons of milk to a 70% lactose hydrolysis level in twenty-four hours when the milk is stored at 40°F. Alternatively, it requires 1/5 of a gallon of 5000 NLU/gram activity product to accomplish 70% lactose hydrolysis in twenty-four hours when the milk is stored at 40°F.

The Food and Drug Administration has determined that hydrolyzed lactose products must contain at least 70% less lactose than the non-hydrolyzed product. Lactose-hydrolyzed, ultra-pasteurized or pasteurized milk containing at least 70% less lactose have been available in the USA for several years.

The literature describes several methods for hydrolyzing the lactose (see R.R. Mahoney, supra). The most widely used process today involves the addition of lactase enzymes and incubation at 40°F for the necessary time to achieve at least 70% lactose hydrolysis. The major disadvantage of this method is the cost of the enzyme. Another problem associated with this process is the inability to control closely the end point of the hydrolysis. This is because of the time required to inactivate the enzyme in a whole batch of milk in a commercial dairy. To overcome these problems a continuous process using immobilized enzymes was proposed. However, this process is not commercially utilized for the hydrolysis of milk at this time.

Since glucose and galactose, the products of hydrolyzed lactose, are sweeter than lactose, lactose-hydrolyzed milk, when tasted, is sweeter than regular milk. This detracts significantly from its consumer acceptance.

U.S. Patent 5,045,336 (M.G. Lindley and E.B. Rathbone) describes a method of reducing the sweetness of an ingestible product containing a sweetening sugar or sugar alcohol by incorporating therein from about 0.0001 to 0.1% by weight of at least one of a series of certain aromatic carboxylic acids or their salts. Included among aromatic carboxylic acids specifically disclosed is (±)-2-p-methoxy-phenoxypropionic acid. Lactose-hydrolyzed milk is not among the food products disclosed.

Since the excess sweetness of lactose-hydrolyzed milk detracts from consumer acceptance, it is evident that a need exists for a more acceptable lactose-hydrolyzed milk. It has now been found that the addition to lactose-hydrolyzed milk of 2-(4-methoxyphenoxy)propanoic acid within a critical range of concentrations suppresses the perceived sweetness of the milk resulting from glucose and galactose formed by hydrolysis of the lactose, thus increasing its consumer acceptance.

According to the present invention therefore there is provided a lactose-hydrolyzed fluid milk comprising fluid milk, the normal lactose content of which has been reduced by at least about 70% by lactase hydrolysis, having incorporated therein from about 1 to about 10 ppm of 2-(4-methoxyphenoxy)propanoic acid or a salt thereof.

The present invention also provides a method of modifying a lactose-hydrolyzed fluid milk, the normal lactose content of which has been reduced by at least about 70% by lactase hydrolysis, in order to suppress perceived sweetness resulting from glucose and galactose produced by the lactose hydrolysis, which comprises incorporating into the lactose-hydrolyzed fluid milk from about 1 to about 10 ppm of 2-(4-methoxyphenoxy)propanoic acid or a salt of said acid.

The present invention further provides a method of suppressing perceived excess sweetness of lactose-hydrolyzed fluid milk, the normal lactose content of which has been reduced by at least about 70% by lactase hydrolysis, which comprises incorporating in the milk from about 1 to about 10 ppm of 2-(4-methoxyphenoxy)propanoic acid or a salt thereof.

As used herein the term "normal lactose content" refers to the amount of lactose inherently present in milk as obtained from the cow; and the term "lactose-hydrolyzed milk" refers to dairy milk the normal lactose content of which has been reduced by at least about 70% by the hydrolysis of the lactose by lactase enzyme, unless otherwise specifically indicated, and includes whole milk, lowfat milk (e.g., 1-2% butterfat content) and nonfat milk.

The compound 2-(4-methoxyphenoxy)propanoic acid (hereafter 2-MPPA) and salts thereof are known. For the purpose of this invention, the salts of 2-MPPA should be physiologically acceptable salts such as, for example, the alkali metal, alkaline earth metal or ammonium salts, particularly the sodium, potassium and calcium salts. The sodium salt of 2-MPPA is commercially available under the tradename Lactisole (Amstar Sugar Corporation).

The concentration of 2-MPPA or salt thereof to be incorporated in the lactose-hydrolyzed milk is in the range of from about 1 to about 10 parts per million (ppm). Preferably the concentration is in the range of from about 2 to about 10 ppm, and more preferably from about 5 to about 10ppm.

The 2-MPPA or salt thereof can be added to the milk at any stage in its processing for consumption. Thus it can be added prior to or during the incubation of the milk with lactase or subsequent thereto. In the latter case, it can be added at the dairy where the milk is processed or after purchase by the consumer. When added by the consumer it can be in any convenient form, e.g., in liquid or tablet form. For example, currently there are available commercially to the consumer lactase preparations in liquid form for addition to milk which has not been subjected to lactase treatment in order to reduce its lactose content. Such preparations could additionally have incorporated therein 2-MPPA or salt thereof in an amount which will provide the concentration required in the milk in accordance with the invention.

The 2-MPPA or salt thereof, when added to the milk during processing, can be incorporated by any standard procedure. For example, it can conveniently be incorporated by sprinkling the appropriate amount into the milk and gently agitating the milk until it is dissolved.

The invention will now be more specifically described with reference to the following examples but its scope is in no way limited thereto.

### Exemplary Disclosure

A test was conducted to evaluate the relative sweetness of two commercially-available skim milks, one regular, i.e., not lactose-hydrolyzed, and the other lactose-hydrolyzed. The degree of lactose hydrolysis was determined using a cryoscope and confirmed by HPLC and found to be 80%. The two skim milks were evaluated using an expert panel consisting of individuals selected for their taste acuity and trained in flavour-profiling techniques. In this test the expert panel consisted of seven individuals and the test was carried out two times for a total of fourteen observations.

All samples submitted to the expert panel were coded. The skim milks were evaluated for the following attributes:
- Sweet: - on a scale of 0 (none) to 8 (very sweet)
- Bitter: - on a scale of 0 (none) to 8 (very bitter)
- Salty: - on a scale of 0 (none) to 8 (very salty)
- Sour: - on a scale of 0 (none) to 8 (very sour)
- Overall quality: - on a scale of 0 (dislike extremely) to 8 (like extremely)
The results of the expert panel's evaluation, expressed as a mean of the scores, are summarized below where A represents the regular skim milk and B represents the lactose-hydrolyzed skim milk.

| Attribute | A | B |
|---|---|---|
| Sweet | 1.0 | 3.5* |
| Sour | 0.5 | 1.0 |
| Salty | 0 | 0 |
| Bitter | 0 | 0.1 |
| Overall quality | 6.4 | 3.0* |

| | | |
|---|---|---|
| *Significantly different from control at the 99% confidence level | | |

The above results clearly show that the lactose-hydrolyzed skim milk (B) is sweeter and less acceptable than the regular skim milk (A).

### Example 1

To samples of the same lactose-hydrolyzed skim milk used in the above described test, there was added 2-MPPA sodium salt (Lactisole). The levels of 2-MPPA sodium salt incorporated in the milk were 5, 7.5 and 10 ppm. These samples and samples of the lactose-hydrolyzed skim milk to which no 2-MPPA sodium salt had been added (control samples) were evaluated for their attributes on a scale of 0 to 8 by the same expert panel of seven individuals used in the test described above. All samples submitted to the expert panel were coded. The results, expressed as a mean of the scores, are summarized below.

### Lactose-Hydrolyzed Skim Milk

| | Control | 2-MPPA sodium salt level: | | |
|---|---|---|---|---|
| | | 5 | 7.5 | 10 |
| Sweet | 3.5 | 1.3* | 1.3* | 0.8* |
| Sour | 1.0 | 0.9 | 1.1 | 1.3 |
| Salty | 0 | 0 | 0 | 0 |
| Bitter | 0.1 | 0.5 | 0.4 | 0.5 |
| Dairy flavour^{a} | 3.0 | 2.6 | 2.8 | 2.0 |
| Overall Quality | 3.0 | 4.8* | 5.0* | 4.2** |

| | | | | |
|---|---|---|---|---|
| a) 0 = none, 8 = too strong | | | | |
| *Significantly different from control at the 99% confidence level | | | | |
| **Significantly different from control at the 95% confidence level | | | | |

The above results clearly show that the incorporation of 2-MPPA sodium salt in lactose-hydrolyzed skim milk of between 5 and 10 ppm reduces the perceived sweetness and improves the overall quality of the milk.

### Example 2

Lowfat milk (1% butterfat) was processed at a UHT (ultrahigh temperature) plant facility as follows:
To pasteurized lowfat milk, lactase enzyme having an activity of 955 NLU/g was added to provide a concentration of 0.02% enzyme. The lowfat milk containing the enzyme then was incubated in a refrigerator at 40°F. The temperature of the milk was measured at 42°F ± 2°F. The degree of hydrolysis was determined using a cryoscope. To 70% lactose-hydrolyzed milk so prepared was added 5 ppm of 2-MPPA sodium salt (Lactisole). The milk then was subjected to UHT treatment and aseptically packaged in gallon containers. Two controls also were prepared, one a non-hydrolyzed lowfat milk, i.e., lowfat milk (1% butterfat) which was not lactose-hydrolyzed, and the other 70% lactose-hydrolyzed lowfat milk (1% butterfat), both UHT treated and neither containing 2-MPPA sodium salt. The three milk products were evaluated by the same taste panel of seven individuals as in Example 1 with the following results (expressed as a mean of the scores).

| Attribute | Control (no lactose-hydrolysis) | Control (lactose hydrolysis) | lactose-hydrolyzed + 5 ppm 2-MPPA sodium salt |
|---|---|---|---|
| Sweet | 1.5 | 3.0 | 2.1* |
| Sour | 0.5 | 0 | 0.8 |
| Salty | 0 | 0 | 0 |
| Bitter | 0 | 0 | 0.4 |
| Dairy flavor | 3.8 | 4.2 | 4.2 |
| % Lactose hydrol. | - | 67.0 | 76.0 |
| Overall Quality | 6.2 | 4.0 | 5.4* |

| | | | |
|---|---|---|---|
| *Significantly different from lactose-hydrolyzed control at 95% confidence level and not significantly different from lowfat control | | | |

These results clearly show that the addition of 2-MPPA sodium salt to lactose-hydrolyzed lowfat milk reduces the perceived sweetness and increases the overall quality thereof. Also, the addition of 2-MPPA sodium salt overcomes the effect of the variability in degree of hydrolysis. It is apparent that even though the product was 76% hydrolyzed it received an overall quality rating similar to the non-hydrolyzed control.

## Claims

1. A lactose-hydrolyzed fluid milk comprising fluid milk, the normal lactose content of which has been reduced by at least about 70% by lactase hydrolysis, having incorporated therein from about 1 to about 10 ppm of 2-(4-methoxyphenoxy)propanoic acid or a salt of said acid.

2. A lactose-hydrolyzed fluid milk as claimed in claim 1 having incorporated therein from about 2 to about 10 ppm of 2-(4-methoxyphenoxy)propanoic acid or a salt of said acid.

3. A lactose-hydrolyzed fluid milk as claimed in claim 2 having incorporated therein from about 5 to about 10 ppm of 2-(4-methoxyphenoxy)propanoic acid or a salt of said acid.

4. A lactose-hydrolyzed fluid milk as claimed in any one of the preceding claims wherein 2-(4-methoxyphenoxy)propanoic acid sodium salt is incorporated.

5. A method of modifying a lactose-hydrolyzed fluid milk, the normal lactose content of which has been reduced by at least about 70% by lactase hydrolysis, in order to suppress perceived sweetness resulting from glucose and galactose produced by the lactose hydrolysis, which comprises incorporating into the lactose-hydrolyzed fluid milk from about 1 to about 10 ppm of 2-(4-methoxyphenoxy)propanoic acid or a salt of said acid.

6. A method of suppressing perceived excess sweetness of lactose-hydrolyzed fluid milk the normal lactose content of which has been reduced by at least about 70% by lactase hydrolysis which comprises incorporating in the milk from about 1 to about 10 ppm of 2-(4-methoxyphenoxy)propanoic acid or a salt of said acid.

7. A method as claimed in either of claims 5 and 6 wherein from about 2 to about 10 ppm of 2-(4-methoxyphenoxy)propanoic acid or a salt of said acid is incorporated.

8. A method as claimed in Claim 7 wherein from about 5 to about 10 ppm of 2-(4-methoxyphenoxy)propanoic acid or a salt of said acid is incorporated.

9. A method as claimed in any one of claims 5 to 8 wherein 2-(4-methoxyphenoxy)propanoic acid sodium salt is incorporated.
